# EUROPEAN PATENT SPECIFICATION

(11) **EP 1 384 406 B1**
(45) Date of publication and mention of the grant of the patent: **18.04.2007**
(21) Application number: 03011779.0
(22) Date of filing: 24.05.2003
(51) Int. Cl.: A21B 3/04

(54) **Steam generator for convection ovens**
Dampferzeuger für Umluftofen
Générateur de vapeur pour four à air chaud

(30) Priority: 25.07.2002 IT VI20020168
(43) Date of publication of application: 28.01.2004
(73) Proprietor: EUROPA S.R.L., 36034 Molina Di Malo, (Vicenza) (IT)
(72) Inventor: Pietro, Sottoriva, 36035 Marano Vicentino, (Vicenza) (IT)
(74) Representative: Bettello, Pietro

(56) References cited:
- EP-A- 0 712 578
- FR-A- 2 820 283
- GB-A- 2 163 845
- US-A- 5 228 385
- US-A- 5 653 164

## Description

The invention relates to a steam generator in convection ovens.

As is well known, in convection ovens for cooking bread or other food products, when the optimal temperature has been reached inside the cooking chamber, steam is used to give particular characteristics to the product which one wishes to obtain.

The steam created inside convection ovens for a few seconds in the initial step or at intervals during the cooking cycle is produced through a steam device, commonly known as a "steam generator", arranged in a space arranged in communication with the cooking chamber or directly in it.

The types of steam generator suitable for such a purpose substantially consist of a structure equipped with metal bodies, i.e. a thermal mass, which are heated by the hot air flow which circulates inside the oven for which reason, when they come into contact with a flow of water, a heat exchange takes place, with the metal bodies themselves giving up the absorbed heat which transforms almost all of the water into steam, which mixes with the hot air that circulates in the cooking chamber.

In the current state of the art there are different types of steam generators. As an example we quote patent document no. EP0532563, in which the bodies used for the heat exchange consist of balls, whereas in patent document no. EP0712578 the aforementioned bodies consist of vertical elongated bodies.

These two types of steam generator, as well as others known in the prior art, do not fully satisfy the requirements needed of said devices which are: high steam production in a short time (a few tens of seconds) and fast temperature recovery of the exchanger bodies after the heat exchange, which lowers its value even by 100/150°C.

Moreover, considering that in this type of ovens the heating of the steam generator takes place by convection through the same air which takes care of cooking the product, it is clear that it is not possible to go beyond certain temperature values of the air, for which reason the positioning and shape of the steam generator, as well as the size of the surface of the mass involved in the heat exchange are of primary importance, in order to allow the maximum accumulation of heat and the maximum transfer of said heat to the water, for the production of a large amount of steam.

In the document GB-A-2163845 is described a steam generator in convection ovens in which the heat mass consists of metal rods which are met by the hot air flow. This device allows to obtain better results in the steam production and the fast temperature recovery of the exchanger bodies but, as the other cited steam generators does not allow fast and/or complete maintenance of the device, in particular cleaning of the lime-scale which deposits on the surface of the thermal masses, to be carried out, which, through time, compromises the heat exchange coefficient thereof and the regular outflow of excess water.

The purpose of the present invention is that of foreseeing a steam device, hereafter referred to with the generic term steam generator, which does not have the drawbacks described above.

A further purpose of the invention is that of foreseeing a steam generator which is simple to construct and easy to assemble, in all types of known convection ovens.

A further purpose of the invention is that of foreseeing a steam generator in which all of its components are removable for cleaning or possibly replaceable in a fast and easy manner.

A further purpose of the present invention is that of foreseeing a steam generator in which the heat exchange mass is licked by hot air in a uniform manner and for the entire exchange surface, so as to operate with the maximum thermal yield.

Such purposes and others, which are clear in the description, are obtained with a steam generator advantageously positioned at the start of the passage section of the hot air, immediately downstream of the heat exchanger and of the recirculation fan, for which reason the air licks first of all the steam generator, so as to be able to exploit to the maximum the heat energy for the temperature recovery.

The object of invention is met by the arrangement as set fourth in the characterising clause of claim 1.

Both the rods and the spacers consist of single elements, not bound together and able to be removed from each other, which are low in weight and bulk, all able to be dismounted quickly and without the help of tools, because they are simply rested, the rods on the comb and these on the base of the tray.

Such a constructive solution thus allows, as well as a substantial simplification of the normal cleaning operations, also a variation in the number of rods or replacement with others of a different size or a different material, according to the type of thermal mass required by particular types of cooking, without the need for interventions of modification or replacement of the entire steam generator, which can also be carried out by unspecialised personnel.

The entire structure of the steam generator is configured like a rack with removable trays, arranged horizontally, consisting of two uprights, equipped with beams for supporting the trays, connected at the top through the tray for falling water to be vaporised and at the bottom through the collection well for the water which has not been vaporised upon contact with the surface of the hot rods.

These and other characteristics of the finding shall become clearer through the description of a possible embodiment thereof, given only as an illustrative and not limiting example, with the help of the attached tables of drawings, where:
- fig. 1 (Tav. I) represents a schematic plan view of a convection oven equipped with the steam generator or steam generator according to the finding;
- fig. 2 (Tav II) represents a perspective view of a steam generator according to the finding;
- figs. 3 and 4 (Tav. III) respectively represent an elevated front view and a side view of the steam generator according to fig. 2;
- fig. 5 (Tav. IV) represents an overall perspective view of the tray;
- figs. 6, 7, 8 and 9 represent perspective views of the components of the tray according to fig. 5;
- figs. 10 and 11 (Tav. V) respectively represent a plan view and a sectioned elevated front view of the tray according to fig. 5;
- fig. 12 (Tav. VI) represents a perspective view of the bearer structure of the steam generator according to fig. 2.

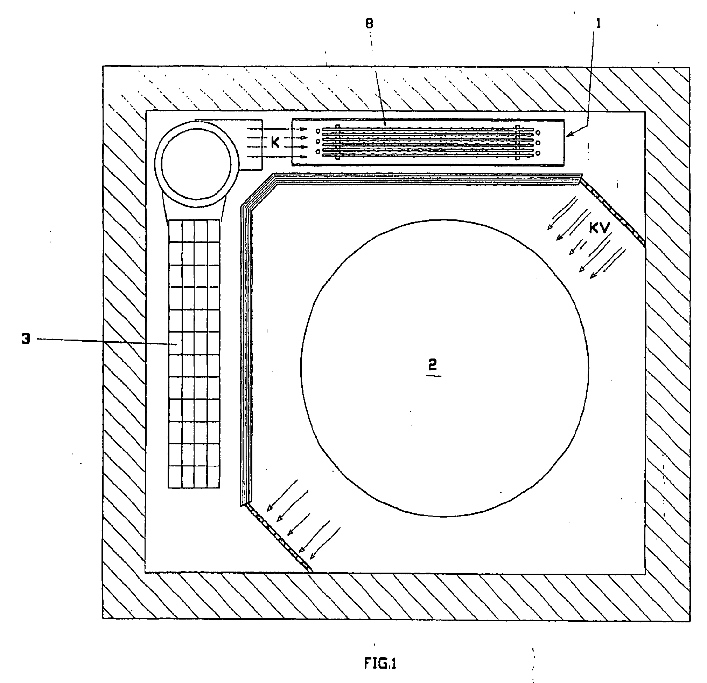

As can be seen in fig. 1, the steam generator or steam generator according to the invention wholly indicated with reference numeral 1, is positioned next to the cooking chamber 2 and is licked by the hot air flow "K", made to circulate with convective motion in the aforementioned chamber by the exchanger/fan group 3.

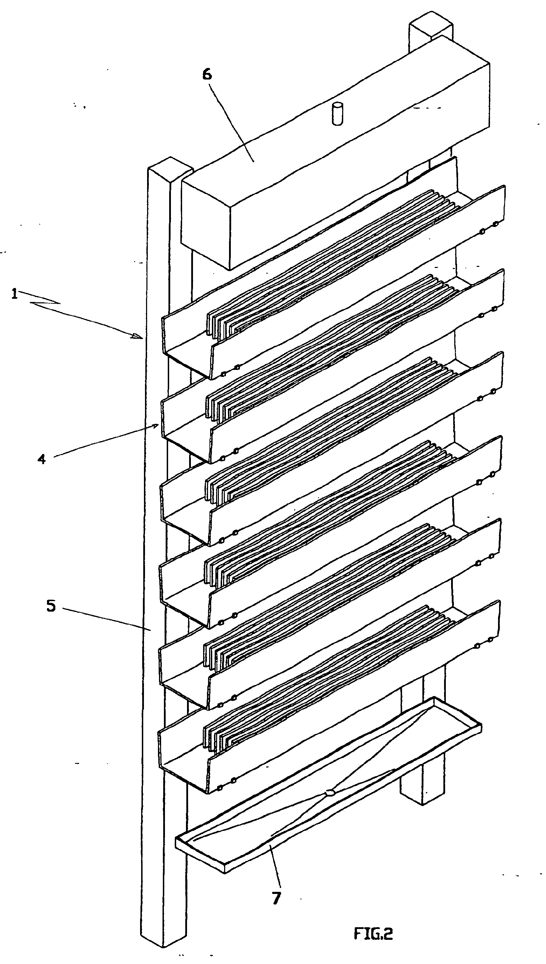

As can be seen in figs. 2, 3 and 4, the steam generator 1 comprises a plurality of trays 4, arranged horizontally and on top of each other, removably mounted on a rack-shaped structure 5 on which the upper tank 6, for the water to be vaporised, and the lower bowl 7, for collecting the unvaporised water, are applied.

The main novelty characteristic of the invention foresees that the thermal mass, wholly indicated with reference numeral 8, which is firstly heated by the hot air flow "K" and then licked by the water, falling by gravity from the tank 6, to produce the steam to be sent, with the flow "K/V" in the cooking chamber, is made up of a plurality of rods 9, with a circular or polyhedral section with longitudinal extension which constitute batteries, contained inside the body 11 of each tray 4.

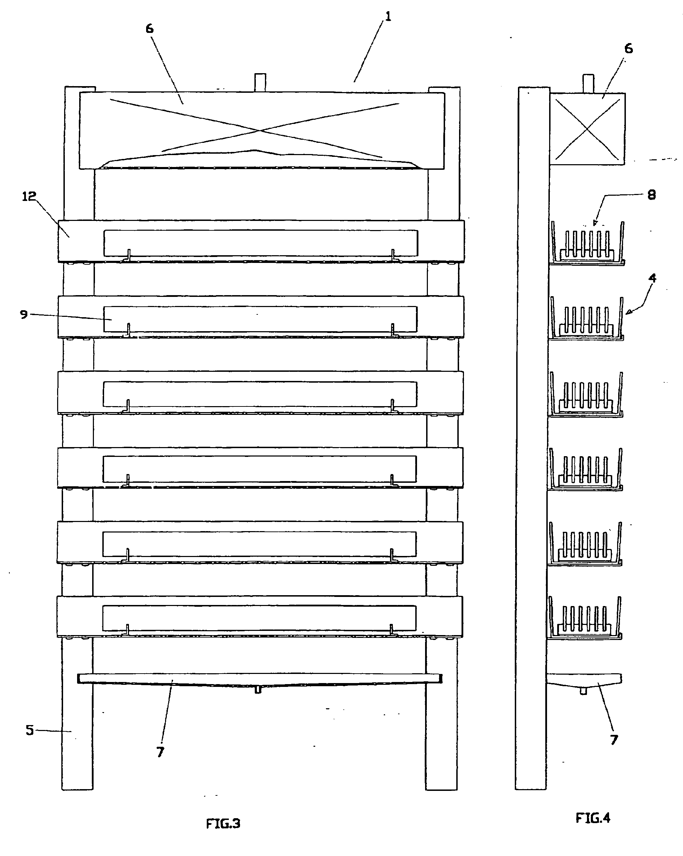

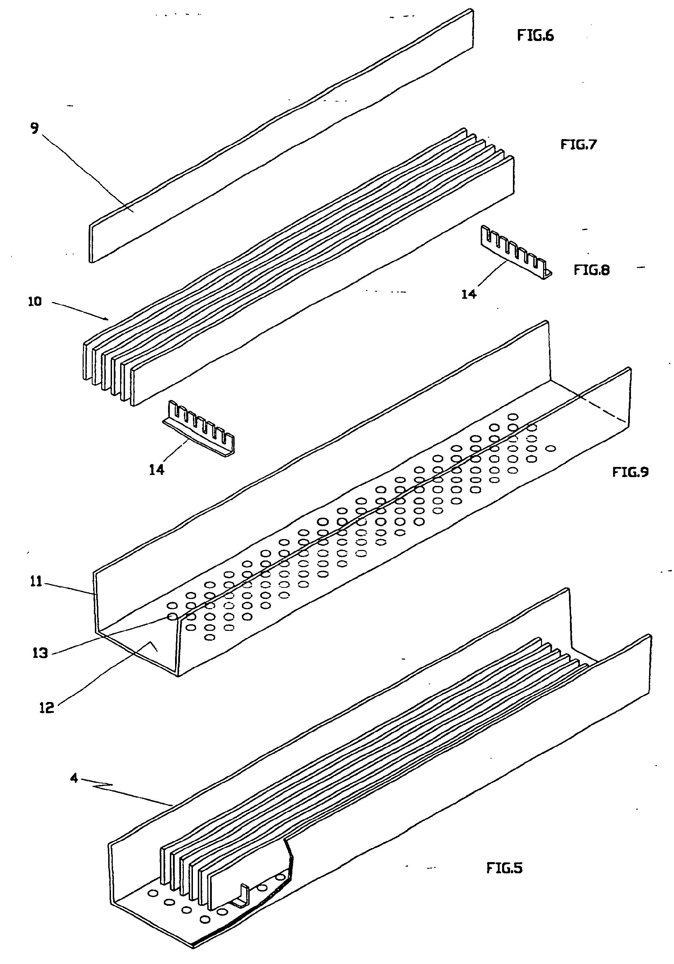

As can be seen in figs. 5 to 9, each tray 4 comprises a battery 10 of rods 9 contained inside the shaped body 11, equipped on the base with holes 13 to allow the passage of water falling by gravity from one tray to the one below.

In particular, the rods 9 rest upon comb elements 14 which take care of keeping said rods 9 spaced from each other and from the base 12.

As can be seen in figs. 6 to 9, all of the components of the tray 4 are individually removable and separate from each other.

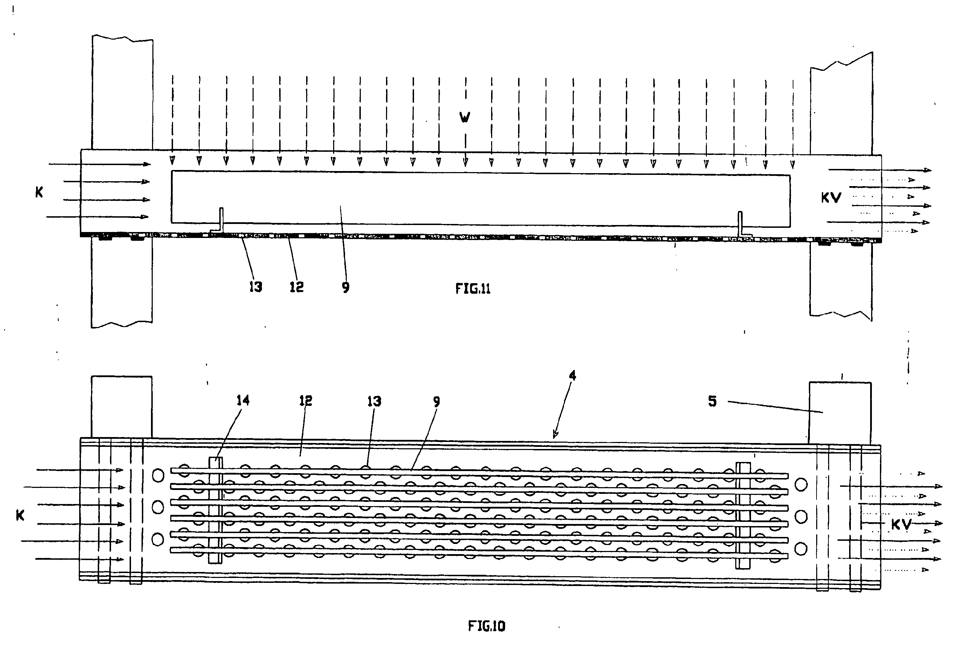

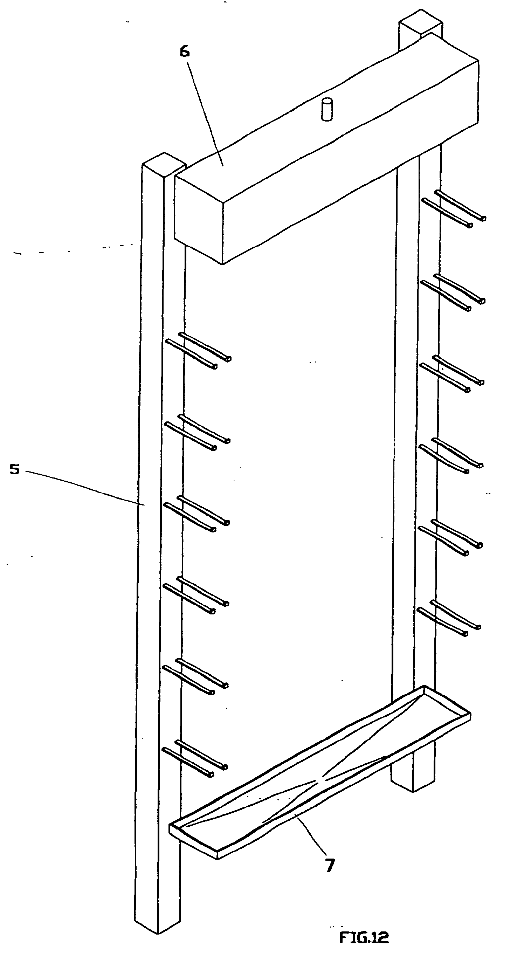

The operating advantage of the constructive solution according to the invention is made clear through figs. 10 and 11 where it is highlighted how the two flows, of hot air "K" and of water "W", lick the whole of he surface of the rods 9, to obtain the optimal relationship between the air/steam flows "K/V" to be produced in the cooking chamber of the oven.

## Claims

1. STEAM GENERATOR in a convection oven of the type used for cooking bread or other food products, in which, when the optimal temperature has been reached inside the cooking chamber (2), steam is used to give particular characteristics to the products which one wishes to obtain, said steam being produced through a "steam generators" (1) arranged in a space or directly in the cooking chamber (2) said generator (1) been positioned next to the cooking chamber (2) and licked by the hot air flow (K), made to circulate in the aforementioned chamber (2) by the exchanger/fan group (3), being provided a thermal mass (8), which is firstly heated by the hot air flow (K) and then licked by the water, falling by gravity from a tank (6) to produce the steam to be sent into the cooking chamber (2), the thermal mass consisting in a plurality of rods (9) with a circular or in any case polyhedral section and with longitudinal extension, the generator being **characterized in that** the rods (9) are disposed in batteries (10) and arranged horizontally and parallel each other, the batteries (10) being placed on top of each other, each of this batteries (10) being disposed inside the shaped body of one tray (4), said shaped body being equipped on its base (12) with holes (13) to allow the passage of water falling by gravity from one tray (4) to the one below, the rods (9) being supported and spaced inside the tray (4) by spacers which keep them separated from each other and raised from the base (12) of the tray (4) itself, the rods (9) and the spacers consisting of single elements, which are bound together and are able to be removed from each other.

2. STEAM GENERATOR, according to claim 1, **characterized in that** the rods (9) rest upon comb elements (14) which take care of keeping the surfaces of said rods (9) separated from each other.

## Patentansprüche

1. Dampferzeuger in einem Umluftofen des Typs, wie er zum Garen von Brot oder sonstigen Speisen verwendet wird, worin, wenn innerhalb der Kochkammer (2) die optimale Temperatur erreicht ist, Dampf dazu verwendet wird, den Produkten bestimmte Eigenschaften zu verleihen, welche man zu erreichen wünscht, wobei der Dampf durch einen "Dampferzeuger" (1) erzeugt wird, der in einem Raum oder direkt in der Kochkammer (2) angeordnet ist, wobei der Erzeuger (1) neben der Kochkammer (2) positioniert und von dem Fluss (K) der Heißluft gestreift wird, die durch die Baugruppe (3) aus Tauscher und Ventilator in der vorgenannten Kammer (2) in Zirkulation versetzt wird, wobei eine thermische Masse (8) vorgesehen ist, welche zunächst durch den Fluss (K) der Heißluft erhitzt und dann durch das Wasser gestreift wird, das aufgrund der Schwerkraft aus einem Tank (6) heraus fällt, um den Dampf zu erzeugen, der in die Kochkammer (2) geleitet werden soll, wobei die thermische Masse aus einer Mehrzahl von Stäben (9) von kreisförmigem oder jedenfalls vielgestaltigem Querschnitt und mit länglichen Fortsätzen besteht, wobei der Generator **dadurch gekennzeichnet ist, dass** die Stäbe (9) in Batterien (10) angeordnet sind, die horizontal und parallel zueinander angeordnet sind, wobei die Batterien (10) übereinander platziert sind, wobei jede dieser Batterien (10) innerhalb des ausgeformten Korpus einer Wanne (4) angeordnet ist, wobei der ausgeformte Korpus an seinem Boden (12) mit Löchern (13) versehen ist, um das Hindurchtreten von Wasser zu erlauben, das infolge der Schwerkraft von einer Wanne (4) auf die darunter Liegende fällt, wobei die Stangen (9) innerhalb der Wanne (4) durch Abstandshalter gehalten und angeordnet werden, die sie voneinander getrennt und gegenüber dem Boden (12) der Wanne (4) selbst erhöht halten, wobei die Stangen (9) und die Abstandshalter aus einzelnen Elementen bestehen, welche nicht miteinander verbunden sind und voneinander getrennt werden können.

2. Dampferzeuger nach Anspruch 1, **dadurch gekennzeichnet, dass** die Stangen (9) auf Kammelementen (14) gelagert sind, welche dafür sorgen, dass die Oberflächen der Stangen (9) voneinander getrennt bleiben.

## Revendications

1. Générateur de vapeur dans un four à convection du type utilisé pour cuire du pain ou d'autres produits alimentaires, dans lequel, lorsque la température optimale est atteinte au sein de la chambre de cuisson (2), de la vapeur est utilisée pour conférer des caractéristiques particulières aux produits que l'on souhaite obtenir, ladite vapeur étant produite par un générateur de vapeur (1) agencé dans un espace ou directement dans la chambre de cuisson (2), ledit générateur (1) étant positionné près de la chambre de cuisson (2) et effleuré par le courant d'air chaud (K), mis à circuler dans la chambre (2) susmentionnée par le groupe échangeur/ventilateur (3), une masse thermique (8) étant fournie, qui est d'abord chauffée par le courant d'air chaud (K) puis effleurée par l'eau qui tombe par gravité depuis une cuve (6) pour produire la vapeur à envoyer dans la chambre de cuisson (2), la masse thermique étant composée de plusieurs tiges (9) présentant une section circulaire ou dans tous les cas polyédrique et ayant une extension longitudinale, le générateur étant **caractérisé en ce que** les tiges (9) sont disposées dans des batteries (10) et agencées horizontalement et parallèlement les unes aux autres, les batteries (10) étant placées les unes au-dessus des autres, chacune de ces batteries (10) étant disposée à l'intérieur du corps façonné d'un plateau (4), ledit corps façonné étant équipé à sa base (12) d'orifices (13) pour permettre le passage de l'eau qui tombe par gravité d'un plateau (4) vers celui du dessous, les tiges (9) étant supportées et espacées au sein du plateau (4) par des entretoises qui les maintiennent séparées les unes des autres et dressées par rapport à la base (12) du plateau (4) lui-même, les tiges (9) et les entretoises se composant d'éléments uniques qui ne sont pas liés ensemble et sont en mesure d'être retirés les uns par rapport aux autres.

2. Générateur de vapeur selon la revendication 1, **caractérisé en ce que** les tiges (9) reposent sur des éléments en peigne (14) qui permettent de laisser les surfaces desdites tiges (9) séparées les unes des autres.
